# EUROPÄISCHE PATENTSCHRIFT

(11) **EP 0 854 339 B1**
(45) Veröffentlichungstag und Bekanntmachung des Hinweises auf die Patenterteilung: **30.10.2002**
(21) Anmeldenummer: 97114384.7
(22) Anmeldetag: 20.08.1997
(51) Int. Cl.: F27B 7/20, C04B 7/43

(54) **Verfahren und Vorrichtung zur Wärmebehandlung von feinkörnigem Gut**
Process and installation for the heat treatment of fine-grained charges
Procédé et installation pour le traitement thermique de charges finement granulées

(30) Priorität: 02.12.1996 DE 19649922
(43) Veröffentlichungstag der Anmeldung: 22.07.1998
(73) Patentinhaber: KRUPP POLYSIUS AG, 59269 Beckum (DE)
(72) Erfinder: Rother, Wolfgang, 59302 Oelde (DE); Adler, Klaus, Dipl-Ing., 33378 Rheda-Wiedenbrück (DE)
(74) Vertreter: Tetzner, Volkmar, Dr.-Ing. Dr. jur.

(56) Entgegenhaltungen:
- EP-A- 0 198 996
- WO-A-92/03691
- DE-A- 2 751 876
- DE-A- 3 817 357
- FR-A- 2 404 823
- GB-A- 2 128 722

## Beschreibung

Die Erfindung betrifft ein Verfahren (entsprechend dem Oberbegriff des Anspruches 1) sowie eine Vorrichtung (entsprechend dem Oberbegriff des Anspruches 9) zur Wärmebehandlung von feinkörnigem Gut, insbesondere zur Herstellung von Zementklinker aus Zementrohmehl.

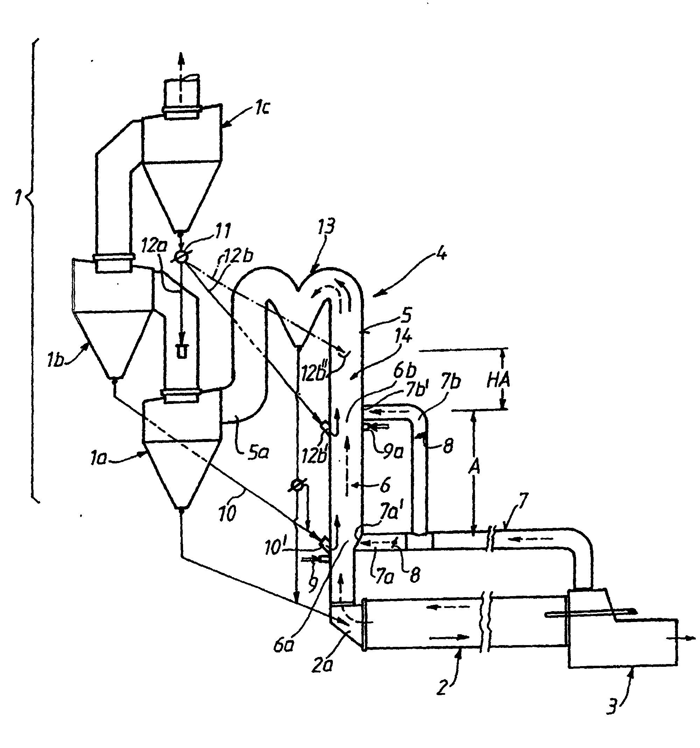

Verfahren und Vorrichtungen der vorausgesetzten Art sind aus der Praxis in verschiedenen Ausführungsarten bekannt, beispielsweise aus DE-A-38 17 357 sowie aus der Firmenzeitschrift "POLYSIUS TEILT MIT" Nr. 171, 1992, Seiten 8 und 9 (Bilder 15 und 16).

Ein wesentlicher Gedanke bei diesen bekannten Ausführungen betrifft die Betriebsweise und Ausbildung der Calcinierzone in der Weise, daß - - auch in Verbindung mit langsam reagierenden bzw. schwer brennbaren Brennstoffen - neben einer möglichst weitgehenden Calcinierung des vorgewärmten Gutes eine deutliche Minderung der in den Ofenabgasen enthaltenen Stickoxide (NOₓ) herbeigeführt werden kann. Zu diesem Zweck wird dem Reaktionsraum innerhalb der Calcinationszone eine solche Tertiärluftmenge zugeführt, daß in ihm eine reduzierende Atmosphäre aufrechterhalten wird. Des weiteren wird das aus der zweituntersten Zyklonstufe des Zyklonvorwärmers kommende, vorgewärmte Gut in wenigstens zwei Teilmengen aufgeteilt, von denen eine erste Teilmenge im unteren Bereich und eine zweite Teilmenge in den oberen Bereich dieses Reaktionsraumes eingegeben wird, um die Reaktionstemperatur im Reaktionsraum auf eine gewünschte Temperatur einzustellen, die im allgemeinen etwas höher ist als die übliche Calciniertemperatur. Besonders die zuvor erwähnte Aufteilung des vorgewärmten Gutes führt vielfach zu baulichen Problemen, die sich besonders deutlich bei nachträglichen Umbauten solcher Wärmebehandlungsvorrichtungen nachteilig auswirken.

Der Erfindung liegt die Aufgabe zugrunde, ein Verfahren gemäß dem Oberbegriff des Anspruches 1 und eine Vorrichtung nach dem Oberbegriff des Anspruches 9 derart weiterzuentwickeln, daß bei guter Einstellbarkeit der Reaktionstemperatur im Reaktionsraum eine sehr weitgehende Reduzierung der Stickoxide (NOₓ) auch bei relativ einfacher und raumsparender Bauweise gewährleistet werden kann.

Diese Aufgabe wird zum einen (verfahrensmäßig) durch die kennzeichnenden Merkmale des Anspruches 1 und zum andern (hinsichtlich, der Vorrichtung) durch die kennzeichnenden Merkmale des Anspruches 9 gelöst.

Vorteilhafte Ausgestaltungen und Weiterbildungen der Erfindung sind Gegenstand der Unteransprüche.

Ein wesentlicher Gedanke dieses erfindungsgemäßen Verfahrens besteht darin, das vorgewärmte Gut aus der zweituntersten Vorwärmstufe im wesentlichen vollständig in den unteren Endbereich des Reaktionsraumes einzuleiten, während das vorgewärmte Gut aus der drittuntersten Vorwärmstufe in wenigstens zwei Teilmengen aufgeteilt wird, von denen eine erste Gutteilmenge in die zweitunterste Stufe der Vorwärmzone und eine zweite Gutteilmenge in die Calcinierzone mit einem deutlichen Höhenabstand oberhalb der Stelle im unteren Raktorraum-Endbereich eingegeben wird, an der das vorgewärmte Gut aus der zweituntersten Vorwärmstufe in diesen Reaktionsraum eingeleitet wird. Die Mengenanteile dieser beiden Gutteilmengen sind in geeigneter Weise einstellbar. Die aus der zweituntersten Vorwärmstufe in die Calcinationszone eingeleitete Gutmenge ist um die aus der drittuntersten Vorwärmstufe in die Calcinationszone eingeführte Gutmenge gemindert. Das führt zu einer entsprechenden Temperaturerhöhung und somit zu der beabsichtigten Temperatureinstellung im Reaktionsraum.

Da somit das vorgewärmte Gut aus der zweituntersten Vorwärmstufe nur dem unteren Endbereich des Reaktionsraumes zugeführt wird, bestehen bei der konstruktiven Gestaltung herkömmlicher Vorwärmzonen, insbesondere in Form von Zyklonvorwärmern, in der Regel keinerlei Schwierigkeiten, den Gutauslauf bzw. die Gutausläufe der zweituntersten Vorwärmstufe mit dem unteren Endbereich des Reaktionsraumes durch eine entsprechende Gutschurre bzw. Gutleitung mit einer ausreichenden Neigung zu verbinden, die ein ungehindertes Abfließen und Verteilen des vorgewärmten Gutes in den Reaktionsraum gewährleistet. In den deutlich höher als dieser untere Endbereich des Reaktionsraumes liegenden oberen Bereich der Calcinationszone wird dagegen lediglich eine zweite Gutteilmenge des aus der nächsthöheren Vorwärmstufe, also aus der drittuntersten Vorwärmstufe kommenden, vorgewärmten Gutes eingeleitet. Die Höhenlage dieser drittuntersten Stufe der Vorwärmzone gegenüber der Calcinationszone bzw. dem Reaktionsraum stellt somit sicher, daß auch der in den weiter oben liegenden Bereich der Calcinationszone einzuleitende Anteil des vorgewärmten Gutes zuverlässig, d.h. ohne irgendwelche Fließprobleme - über eine geeignete Rutsche oder Leitung - sowie unter Ausnutzung der kinetischen Fallenergie des Gutes an der entsprechenden Einleitstelle in die Calcinationszone dispergiert werden kann, was zu einer relativ raumsparenden Bauweise im Bereich der Vorwärmzone und Calcinationszone führt, und zwar nicht nur bei neuen Vorrichtungen, sondern auch bei umzubauenden, bereits existierenden Vorrichtungen.

Da bei diesem erfindungsgemäßen Verfahren in den höher liegenden Bereich der Calcinationszone nur ein entsprechend einstellbarer Anteil des in der drittuntersten Vorwärmstufe vorgewärmten Gutes eingegeben wird, das noch nicht so hoch vorgewärmt ist wie das der zweituntersten Vorwärmstufe, ergeben sich in verfahrenstechnischer Hinsicht noch besondere Vorteile in bezug auf eine besonders gute Einstellbarkeit der in der Calcinationszone bzw. im Reaktionsraum erforderlichen Reaktionstemperaturen.

Die in dem Reaktionsraum aufrechtzuerhaltende reduzierende Atmosphäre kann vor allem dadurch gesteuert werden, daß zumindest in den unteren Bereich des Reaktionsraumes Tertiärluft eingeleitet wird, die mit zugeführtem Brennstoff entsprechend reagiert und zweckmäßig in ihrer Menge eingestellt werden kann. Auf diese Weise kann - in Anpassung an die jeweilige Ausbildung der Calcinationszone bzw. an den jeweiligen Calcinatortyp - zuverlässig für eine sehr weitreichende Reduzierung der Stickoxide in den Ofenabgasen gesorgt werden.

Dabei hat es sich ferner als vorteilhaft erwiesen, die in den höherliegenden Bereich der Calcinationszone einzugebende zweite Gutteilmenge aus der drittuntersten Vorwärmstufe in einem Anteil von etwa 20 bis 40%, vorzugsweise in einer Größenordnung von etwa 30%, zu wählen und die erste Gutteilmenge als Hauptmenge insgesamt in die zweitunterste Vorwärmstufe einzuführen.

Bei diesem erfindungsgemäßen Verfahren wird zweckmäßig so vorgegangen, daß - jeweils in Strömungsrichtung der Brennzonen-Abgase (Ofenabgase) betrachtet - ein einstellbarer erster Teilstrom der Tertiärluft ebenfalls in den unteren Bereich des Reaktionsraumes sowie nach (oberhalb) einer Brennstoffzuführung und ein einstellbarer zweiter Teilstrom dieser Tertiärluft als Oberluft in den oberen Endbereich des Reaktionsraumes eingeleitet wird.

Hier kann es auch besonders zweckmäßig sein, im Ofeneinlauf noch einen zusätzlichen Brenner (Ofeneinlaufbrenner) vorzusehen, mit dessen Hilfe im Ofeneinlauf eine reduzierende Atmosphäre im Ofenabgas erzeugt und NOₓ aus der Hauptfeuerung abgebaut wird. Es kann auf diese Weise dann eine mehrfach gestufte Verbrennung des in die Calcinationszone eingeführten Brennstoffes erzielt werden, wobei die Verbrennungsstufe in der Calcinationszone den genannten Reaktionsraum bildet, in dem eine unvollständige Verbrennung geschieht.

Aus Gründen der Reaktionskinetik im Reaktionsraum hat es sich ferner als besonders zweckmäßig erwiesen, wenn der Abstand der Einleitungsstelle des ersten Tertiärluft-Teilstromes und der Einleitungsstelle des zweiten Tertiärluft-Teilstromes bzw. der Oberluft so groß bemessen wird, daß die Gasverweilzeit zwischen diesen beiden Einleitungsstellen, d.h. im eigentlichen Reaktionsraum, im Bereich von etwa 0,5 bis 1 s liegt, wodurch dann auch die Bauhöhe des Reaktionsraumes bei einer vorgegebenen, einzuhaltenden Gastransportgeschwindigkeit festgelegt ist.

Bei diesem erfindungsgemäßen Verfahren wird es gemäß einer ersten Ausführungsart ferner als vorteilhaft angesehen, wenn die zweite Gutteilmenge aus der drittuntersten Vorwärmstufe etwa in Höhe der Oberluft-Einleitstelle in den oberen Endbereich des Reaktionsraumes eingegeben und so groß bemessen wird, daß die Reaktionstemperatur in diesem Reaktionsraum (zwischen dessen unterem und oberem Endbereich) auf etwa 900 bis 1.000 °C eingestellt werden kann. Die Reaktionstemperatur läßt sich somit in optimaler Weise an die gewünschte bzw. notwendige Verminderung des NOₓ-Gehalts in den Ofenabgasen anpassen.

Zumindest in den Fällen, in denen die zugeführte Tertiärluft in zwei Teilströme aufgeteilt und zum einen in den unteren Endbereich des Reaktionsraumes und zum anderen als Oberluft in den oberen Endbereich des Reaktionsraumes eingeführt wird, kann es ferner von Vorteil sein, wenn unterhalb, und zwar möglichst dicht unterhalb der Oberluft-Einleitungsstelle weiterer Brennstoff zugeführt wird. Hierdurch kann in dem oberhalb des Reaktionsraumes liegenden Abschnitt der Calcinationszone im Bedarfsfalle die Reaktionstemperatur wieder etwas angehoben werden.

Es kann in diesem Zusammenhang dann gemäß einer zweiten Ausführungsart des Verfahrens zweckmäßig sein, wenn - in Strömungsrichtung der Brennofen-Abgase betrachtet - in der Calcinationszone im Anschluß an den oberen Endbereich des Reaktionsraumes eine zweite Teilzone unter oxidierenden Brennbedingungen mit Temperaturen unterhalb 1.200 °C, vorzugsweise in einem Temperaturbereich von etwa 900 bis 1.050 °C, als Oxidationszone betrieben und wenn die zweite Gutteilmenge aus der drittuntersten Vorwärmstufe dann mit einem entsprechenden Abstand (Höhenabstand) oberhalb der Oberluft-Einleitungsstelle in diese Oxidationszone eingegeben wird (im Gegensatz zu der etwas weiter oben erwähnten ersten Ausführungsart). Auf diese Weise wird in der Calcinierzone ganz bewußt zum einen in einer unteren ersten Teilzone ein Reaktionsraum mit einer reduzierenden Atmosphäre und zum andern in einer darüberliegenden zweiten Teilzone eine Oxidationszone ausgebildet und betrieben, so daß einerseits für eine zuverlässige Reduzierung der Stickoxide (in der unteren ersten Teilzone bzw. dem Reaktionsraum) und andererseits in der darüberliegenden Oxidationszone für deutlich verbesserte Verbrennungsbedingungen gesorgt wird, um für einen zuverlässigen Ausbrand des in den aus dem Reaktionsraum aufsteigenden Ofenabgasen enthaltenen Kohlenmonoxids (CO) - aufgrund der oxidierenden Brennbedingungen - zu sorgen. Die in dieser Oxidationszone herrschende Reaktionstemperatur sollte so hoch wie möglich sein, jedoch nicht höher als 1.200 °C liegen; aus Gründen der Betriebssicherheit wird ein günstiger Temperaturbereich bei etwa 900 bis 1.050 °C liegen.

Gemäß einer anderen vorteilhaften Weiterbildung des erfindungsmäßigen Verfahrens kann es mitunter auch zweckmäßig sein, im Reaktionsraum in die ihn durchströmenden Abgase Ammoniak (NH₃), eine Ammoniak-Lösung oder ein entsprechend wirksames Additiv zwecks NOₓ-Minderung einzudüsen. Dabei wird ohne zusätzliche Zufuhr von sog. Oberluft (wie oben erwähnt) gearbeitet. Mit der Justierung der Gutmengen wird der für den sogenannten SNCR-Prozeß (= selective non-catalytic reaction) vorteilhafte Temperaturbereich im Reaktionsraum eingestellt.

Selbst wenn bei dem erfindungsgemäßen Verfahren ein geringfügig höherer Wärmeverbrauch auftreten kann, wird dieser zum einen durch eine deutlich effektivere NOₓ-Minderung in den Ofenabgasen mehr als ausgeglichen, und zum andern ergeben sich noch die bereits weiter oben erwähnten baulichen Vorteile. Dieses erfindungsgemäße Verfahren kann darüber hinaus auch besonders optimal betrieben werden, wenn in der Calcinationszone äußerst schwer brennbare Brennstoffe eingesetzt werden, wie z.B. Graphit, Petrol-Koks vom Typ Fluid und dgl., wobei die relativ höhere Reaktionstemperatur einen vollständigen Ausbrand dieser Brennstoffe unterstützt.

Die Erfindung sei nachfolgend anhand der Zeichnung (mit einer einzigen Figur) weiter erläutert, in der rein schematisch ein Ausführungsbeispiel einer Vorrichtung zur Wärmebehandlung von körnigem Gut, insbesondere zur Herstellung von Zementklinker aus Zementrohmaterial ganz schematisch veranschaulicht ist.

Die in der Zeichnung veranschaulichte Wärmebehandlungsvorrichtung enthält als Vorwärmzone für das feinkörnige Gut einen in an sich bekannter Weise ausgebildeten, von heißen Gasen von unten nach oben durchströmten Zyklonvorwärmer 1 mit mehreren im wesentlichen übereinander angeordneten Zyklonstufen, von denen in der Zeichnung der Einfachheit halber lediglich die unterste Zyklonstufe 1a, die zweitunterste Zyklonstufe 1b und die drittunterste Zyklonstufe 1c veranschaulicht sind, bei denen es sich - wie an sich bekannt - um jeweils wenigstens einen Zyklonabscheider (Zyklonwärmetauscher) handeln kann. Dieser Zyklonvorwärmer 1 kann je nach Bedarf beispielsweise vier, fünf oder sechs, im wesentlichen übereinander angeordnete Zyklonstufen enthalten.

Zum Fertigbrennen des vorerhitzten Gutes ist ein Brennofen in Form eines Drehrohrofens 2 vorgesehen, dem - in Gutfließrichtung - ein Kühler (Kühlzone) 3 zum Abkühlen des gebrannten Gutes, also des Zementklinkers nachgeordnet ist.

In dieser Zeichnung symbolisieren durchgehend dargestellte Pfeile das zu behandelnden Gut und seine Fließrichtung, während gestrichelte Pfeile allgemein die Gasströme und ihre Strömungsrichtung andeuten.

Ein wichtiger Abschnitt in dieser erfindungsgemäßen Vorrichtung ist ferner eine Calcinationszone 4, die zwischen dem Drehrohrofen 2 und dem Zyklonvorwärmer 1 angeordnet ist und u.a. von den heißen Abgasen des Drehrohrofens 2 - entsprechend den gestrichelten Pfeilen - durchströmt wird. Im veranschaulichten Ausführungsbeispiel wird die Calcinationszone 4 zumindest von einer den Drehrohrofeneinlauf 2a mit der untersten Vorwärmer-Zyklonstufe 1a verbindenden Ofenabgasleitung 5 gebildet, wobei das dem Drehrohrofen 2 entgegengesetzte Ende 5a der Ofenabgasleitung in diese unterste Vorwärmer-Zyklonstufe 1a einmündet, so daß letztere gleichzeitig auch noch einen Teil der Vorcalcinationszone 4 bilden kann.

Ein im wesentlichen vertikal verlaufender, unterer erster Teilabschnitt der Ofenabgasleitung 5, also gewissermaßen eine erste untere Teilzone der Calcinationszone 4 oberhalb des Ofeneinlaufs 2a ist als Reaktionsraum 6 ausgebildet. Etwa an diesem Teilabschnitt der Ofenabgasleitung 5 ist eine erwärmte Kühlerabluft als Tertiärluft heranführende Tertiärluftleitung 7 angeschlossen. Diese Tertiärluftleitung 7 ist im vorliegenden Beispiel in zwei mit Mengeneinstellorganen 8 versehene Tertiärluft-Teilleitungen 7a, 7b unterteilt. Die erste Tertiärluft-Teilleitung 7a ist an der Einleitungsstelle 7a' an den unteren Endbereich 6a des Reaktionsraumes 6, und zwar - in Strömungsrichtung (gestrichelte Pfeile) der Ofenabgase betrachtet - hinter einer unteren Brennstoffzuführung 9 für die Calcinationszone 4 und die eine Oberluft-Zuführleitung bildende zweite Tertiärluft-Teilleitung 7b ist an der Einleitungsstelle 7b' an den oberen Endbereich 6b dieses Reaktionsraumes 6 angeschlossen. Dicht unterhalb dieser Einleitungsstelle 7b' für Oberluft kann zweckmäßig eine zweite Brennstoffzuführung 9a zur Calcinationszone 4 bzw. in den oberen Endbereich 6b des Reaktionsraumes 6 angeordnet sein.

Der vertikale Abstand A zwischen den beiden zuvor definierten Tertiärluft-Anschlußstellen 7a' und 7b' bestimmt die Länge des Reaktionsraumes 6, wobei dies vorzugsweise derart geschieht, daß die Gasverweilzeit im Reaktionsraum 6 zwischen den Endbereichen 6a und 6b auf etwa 0,5 bis 1 s eingestellt wird. Hierbei ist es wichtig, daß im Reaktionsraum 6 - wie bereits weiter oben im Zusammenhang mit der Erläuterung des erfindungsgemäßen Verfahrens erwähnt - eine reduzierende Atmosphäre zur Minderung des NOₓ-Gehalts in den Abgasen des Drehrohrofens aufrechterhalten wird.

Diesem Reaktionsraum 6 wird jedoch nicht nur Tertiärluft zugeführt, sondern auch vorgewärmtes Gut aus dem Zyklonvorwärmer 1. Dies geschieht in der Weise, daß das vorgewärmte Gut aus der zweituntersten Zyklonstufe 1b des Zyklonvorwärmers 1 im wesentlichen vollständig über eine Gutleitung 10, die - an der Einleitstelle 10' - an den unteren Endbereich 6a des Reaktionsraumes 6 angeschlossen ist, in diesen unteren Bereich des Reaktionsraumes 6 eingeleitet wird. Das vorgewärmte Gut aus der drittuntersten Zyklonstufe 1c des Zyklonvorwärmers 1 wird dagegen durch eine Gutaufteileinrichtung 11 an sich bekannter Ausführung (mit wenigstens zwei Teilleitungsanschlüssen zum einstellbaren Aufteilen des Gutes) in wenigstens zwei Teilmengen aufgeteilt. Hiervon wird die erste Gutteilmenge über eine erste Gutteilleitung 12a in die zweitunterste Zyklonstufe 1b eingegeben. Die zweite Gutteilmenge wird dagegen über eine zweite Gutteilleitung 12b in die Calcinationszone 4 grundsätzlich mit einem deutlichen Höhenabstand oberhalb der Einleitstelle 10' eingegeben, an der das vorgewärmte Gut aus der zweituntersten Zyklonstufe 1b - über die Gutleitung 10 - in den Reaktionsraum 6 eingeleitet wird. Dies geschieht nach einer ersten Ausführungsart der Vorrichtung bzw. des Verfahrens in der Weise, daß die zweite Gutteilmenge über die zweite Gutteilleitung 12b an der Einleitungsstelle 12b' in den oberen Endbereich 6b des Reaktionsraumes 6 eingegeben wird. Die drittunterste Zyklonstufe 1c des Zyklonvorwärmers 1 ist in diesem Falle somit über die Gutaufteileinrichtung 11 und die Gutteilleitungen 12a und 12b einerseits mit der zweituntersten Zyklonstufe 1b und über die zweite Gutteilleitung 12b mit dem oberen Endbereich 6b des Reaktionsraumes 6 verbunden, wobei der Höhenabstand zwischen den Guteinleitstellen 10' und 12b' - wie die Zeichnung zeigt - annähernd dem vertikalen Abstand A entspricht.

Wie in der Zeichnung zu erkennen ist, sind die verschiedenen Zuführungen im oberen Endbereich 6b des Reaktionsraumes 6 zweckmäßig so gewählt, daß die als Oberluftzuführung dienende zweite Tertiärluft-Teilleitung 7b in Höhe der Anschluß- bzw. Einleitstelle 12b' der zuvor erwähnten zweiten Gutteilleitung 12b an den oberen Endbereich 6b des Reaktionsraumes 6 angeschlossen ist.

Durch die erfindungsgemäße Aufteilung und Einleitung der vorgewärmten Gutmengen aus verschiedenen Vorwärmstufen, nämlich der zweituntersten und der drittuntersten Zyklonstufe 1b bzw. 1c des Zyklonvorwärmers 1 wird somit zum einen eine optimale Einstellbarkeit für die Reaktionstemperatur im Reaktionsraum 6 geschaffen, und zum andern ist es unschwer zu erkennen, daß die Aufteilung des vorgewärmten Gutes aus der drittuntersten Zyklonstufe 1c bei sehr einfacher Durchführbarkeit besondere bauliche Vorteile insofern schafft, daß die zum oberen Endbereich 6b des Reaktionsraumes 6 führende Gutteilleitung 12b stets eine ausreichend starke Neigung erhalten kann, die selbst bei nachträglichen Umbauten bereits vorhandener Vorrichtungen ein zuverlässiges Fließen des darin weiterzuleitenden Gutes gewährleisten kann. Die Rohmehl- bzw. Gutzufuhr über die Gutteilleitung 12b erniedrigt zwangsläufig die Gutmenge in den Leitungen 12a und 10. Dadurch wird die Temperatur im Reaktionsraum 6 entsprechend erhöht.

Bei dem in der Zeichnung veranschaulichten Ausführungsbeispiel wird es ferner als Vorteil angesehen, wenn in der Ofenabgasleitung 5 in Gasströmungsrichtung (gestrichelte Pfeile) mit ausreichendem Abstand hinter dem Reaktionsraum 6 noch eine Umlenk- bzw. Mischkammer 13 ausgebildet ist. Durch diese Ausbildung kann dafür gesorgt werden, daß die in diesem hinteren Abschnitt der Calcinationszone 4 strömenden Gase vor dem Eintritt in die unterste Zyklonstufe 1a noch besonders stark vermischt werden, um dadurch eine Nachreaktion von Kohlenmonoxid und unverbrannten Teilen (Partikeln) mit dem Sauerstoff in diesen Gasen herbeizuführen. Dabei kann - wie durch Leitungen angedeutet - ein Teil des mitgeführten Gutes entweder in die Calcinationszone 4 zurückgeführt oder auch bereits dem Drehrohrofeneinlauf 2a zugeleitet werden.

Bei diesem erfindungsgemäßen Verfahren bzw. bei der zuvor erläuterten erfindungsgemäßen Vorrichtung kann es mitunter auch von Vorteil sein, unter Ausnützung des einstellbaren Temperaturbereiches in den Reaktionsraum zusätzlich Ammoniak (NH₃), eine entsprechende Ammoniak-Lösung oder ein wirksames Additiv zwecks weiterer NOₓ-Minderung einzudüsen, wozu dann eine geeignete, an sich bekannte Einrichtung zum Eindüsen von NH₃, einer NH₃-Lösung oder eines Additivs in den Reaktionsraum 6 angeordnet werden kann, ohne daß dies im einzelnen veranschaulicht zu werden braucht.

Beim Betrieb dieser erfindungsgemäßen Vorrichtung entsprechend dem sogenannten SNCR-Prozess wird - wie weiter oben bereits angedeutet - die die Oberluft zuführende Tertiärluft-Teilleitung 7b abgesperrt. Die Verbrennung des in die Calcinationszone eingeführten Brennstoffes erfolgt in oxidierender Atmosphäre. Die Zudosierung von NH₃ oder ähnlichen Mitteln erfolgt nach der Brennstoff- und Tertiärluftzufuhr. Durch die Gutmengenaufteilung (entsprechend den Leitungen 10 und 12b) wird das optimale Temperaturfenster für diesen SNCR-Prozeß eingestellt. Ein im Ofeneinlauf 2a angeordneter zusätzlicher Brenner (wie oben erwähnt) bleibt dabei in Betrieb. Da das aus dem Drehrohrofen 2 kommende NOₓ damit teilweise reduziert wird, kann die Menge des zudosierten NH₃ geringer gehalten werden, was zu einer Kostenreduzierung führt. CO und Unverbranntes aus dem Ofeneinlauf 2a werden in der oxidierenden Atmosphäre der Feuerung in der Calcinationszone verbrannt. Die bereits weiter oben im Zuammenhang mit dem erfindungsgemäßen Verfahren erläuterte Anordnung und Funktion des Ofeneinlaufbrenners bringt somit bei der Anwendung des sogenannten SNCR-Prozesses ebenfalls noch zusätzliche Vorteile.

Die zuvor beschriebene Vorrichtung zur Wärmebehandlung bzw. das darin durchführbare Verfahren kann im Bedarfsfalle noch auf einfache Weise abgewandelt werden. Wie bereits weiter oben im Zusammenhang mit der Erläuterung des Verfahrens beschrieben worden ist, kann gemäß einer zweiten Ausführungsart der Erfindung in der Calcinationszone 4 im Anschluß an den oberen Endbereich 6b des Reaktionsraumes 6 eine zweite Teilzone als Oxidationszone 14 besonders ausgebildet und betreibbar sein. Diese Oxidationszone 14 kann u.a. durch die Oberluftzuführung (an der Einleitstelle 7b') und durch die weitere Brennstoffzuführung 9a auf Oxidationsbedingungen mit einer Temperatur von unterhalb 1.200 °C, vorzugsweise in einem Temperaturbereich von etwa 900 bis 1.050 °C, eingestellt werden.

Während bei der weiter oben beschriebenen ersten Ausführungsart der Vorrichtung bzw. des Verfahrens die von der drittuntersten Zyklonstufe 1c kommende zweite Gutteilleitung 12b an den oberen Endbereich 6b des Reaktionsraumes 6 angeschlossen ist, soll diese zweite Gutteilleitung 12b stattdessen gemäß der zweiten Ausführungsart und entsprechend der strichpunktierten Darstellung in der Zeichnung an die Oxidationszone 14 mit einem Abstand bzw. Höhenabstand HA oberhalb der Anschlußstelle für die zweite Tertiärluft-Teilleitung/Oberluftzuführung 7b, also noch deutlich oberhalb des oberen Endbereiches 6b des Reaktionsraumes 6 angeschlossen sein. Die Einleitstelle 12b'' für die aus der drittuntersten Vorwärmer-Zyklonstufe 1c kommende Gutteilmenge in die Calcinationszone 4 liegt somit - genau wie bei der ersten Ausführungsart - ebenfalls mit einem deutlichen Höhenabstand, nämlich der vertikalen Höhe A plus dem Höhenabstand HA (vgl. Zeichnung), oberhalb der Guteinleitstelle 10' für das aus der zweituntersten Zyklonstufe 1b in den unteren Endbereich 6a des Reaktionsraumes 6 eingeleitete vorgewärmte Gut.

Was die Alternativen für das Einleiten der zweiten Gutteilmenge aus der drittuntersten Vorwärmstufe (Zyklonstufe 1c) bzw. den Anschluß der zweiten Gutteilleitung 12b an die Calcinationszone 12 anbelangt, so bestehen dafür zumindest zwei Möglichkeiten: Zum einen kann von vornherein eine einzige Gutteilleitung 12b entweder an den oberen Endbereich 6b des Reaktionsraumes 6 (Einleitstelle 12b') oder in die Oxidationszone 14 (mit der Einleitstelle 12b'') fest installiert sein; zum andern kann es mitunter aber auch von Vorteil sein, wenn an einer geeigneten Stelle der Gutteilleitung 12b eine Zweiwegeweiche installiert wird, von der ein Abzweig zu der Einleitstelle 12b' im oberen Endbereich 6b des Reaktionsraumes 6 und ein zweiter Abzweig an die Einleitstelle 12b'' in der Oxidationszone 14 fest installiert wird. Im letzteren Falle kann somit mit Hilfe der Zweiwegeweiche von der einen Betriebsart auf die andere Betriebsart umgeschaltet werden (jeweils in Anpassung an die Zementrohmehlzusammensetzungen, Brennstoffarten oder dergl.).

Die Erläuterung der erfindungsgemäßen Wärmebehandlungsvorrichtung anhand der Zeichnung macht deutlich, daß diese Vorrichtung auch besonders gut für die Durchführung des eingangs beschriebenen erfindungsgemäßen Verfahrens geeignet ist.

## Patentansprüche

1. Verfahren zur Wärmebehandlung von feinkörnigem Gut, insbesondere zur Herstellung von Zementklinker aus Zementrohmehl, mit folgenden Verfahrensschritten:
a) Das Gut wird in einer mehrstufigen Vorwärmzone (1) mittels heißer Gase vorgewärmt,
b) danach wird das vorgewärmte Gut in einer von heißen Abgasen einer Brennzone (2) durchströmten, mit zusätzlichem Brennstoff versorgten Calcinationszone (4) weiter erhitzt und zumindest weitgehend calciniert,
c) anschließend wird das so calcinierte Gut in der Brennzone fertiggebrannt und dann in einer Kühlzone (3) abgekühlt,
d) wobei erwärmte Abluft aus der Kühlzone (3) als Tertiärluft in die Calcinationszone (4) eingeleitet und darin eine untere Teilzone als Reaktionsraum (6) betrieben wird, der mit vorgewärmtem Gut aus der zweituntersten Vorwärmstufe (1b) beschickt und in dem eine reduzierende Atmosphäre zur Minderung des Stickoxidgehalts in den Abgasen der Brennzone (2) aufrechterhalten wird,
**gekennzeichnet durch** folgende Merkmale:
e) das vorgewärmte Gut aus der zweituntersten Vorwärmstufe (1b) wird im wesentlichen vollständig in den unteren Endbereich (6a) des Reaktionsraumes (6) der Calcinationszone (4) eingeleitet, während das vorgewärmte Gut aus der drittuntersten Vorwärmstufe (1c) in wenigstens zwei Teilmengen aufgeteilt wird, von denen eine erste Gutteilmenge in die zweitunterste Vorwärmstufe und eine zweite Gutteilmenge in die Calcinationszone (4) mit einem deutlichen Höhenabstand oberhalb der Stelle (10') im unteren Endbereich (6a) eingegeben wird, an der das vorgewärmte Gut aus der zweituntersten Vorwärmstufe (1b) in den Reaktionsraum (6) eingeleitet wird;
f) zumindest in den unteren Endbereich (6a) des Reaktionsraumes (6) wird Tertiärluft eingeleitet.

2. Verfahren nach Anspruch 1, **dadurch gekennzeichnet, daß** die in den höherliegenden Endbereich der Calcinationszone einzugebende zweite Gutteilmenge aus der drittuntersten Vorwärmstufe (1c) in einem Anteil von etwa 20 bis 40%, vorzugsweise in einer Größenordnung von etwa 30%, gewählt und die erste Gutteilmenge als Hauptmenge insgesamt in die zweitunterste Vorwärmstufe (1b) eingeführt wird.

3. Verfahren nach Anspruch 1, **dadurch gekennzeichnet, daß** - jeweils in Strömungsrichtung der Brennzonen-Abgase betrachtet - ein einstellbarer erster Teilstrom der Tertiärluft in den unteren Endbereich (6a) des Reaktionsraumes (6) sowie nach einer Brennstoffzuführung (9) und ein einstellbarer zweiter Teilstrom dieser Tertiärluft als Oberluft in den oberen Endbereich (6b) des Reaktionsraumes (6) eingeleitet wird.

4. Verfahren nach Anspruch 3, **dadurch gekennzeichnet, daß** der Abstand (A) zwischen den Einleitungsstellen des ersten Tertiärluft-Teilstromes und der Einleitungsstelle des zweiten Tertiärluft-Teilstromes (Oberluft) so groß bemessen wird, daß die Gasverweilzeit zwischen diesen beiden Einleitungsstellen im Bereich von etwa 0,5 bis 1 s liegt.

5. Verfahren nach Anspruch 3, **dadurch gekennzeichnet, daß** die zweite Gutteilmenge aus der drittuntersten Vorwärmstufe (1c) etwa in Höhe der Oberluft-Einleitstelle (7b') in den oberen Endbereich (6b) des Reaktionsraumes (6) eingegeben und so groß bemessen wird, daß die Reaktionstemperatur zwischen dem unteren Endbereich (6a) und dem oberen Endbereich (6b) in diesem Reaktionsraum auf etwa 900 bis 1.000 °C eingestellt wird.

6. Verfahren nach Anspruch 3, **dadurch gekennzeichnet, daß** unterhalb der Oberluft-Einleitungsstelle (7b') weiterer Brennstoff zugeführt wird.

7. Verfahren nach Anspruch 6, **dadurch gekennzeichnet, daß** - in Strömungsrichtung der Brennzonen-Abgase betrachtet - in der Calcinationszone (4) im Anschluß an den oberen Endbereich (6b) des Reaktionsraumes (6) eine zweite Teilzone unter oxidierenden Brennbedingungen mit Temperaturen unterhalb 1.200 °C, vorzugsweise in einem Temperaturbereich von etwa 900 bis 1.050 °C, als Oxidationszone (14) betrieben und daß die zweite Gutteilmenge aus der drittuntersten Vorwärmstufe mit Abstand oberhalb der Oberluft-Einleitungsstelle (7b') in diese Oxidationszone (14) eingegeben wird.

8. Verfahren nach Anspruch 1, **dadurch gekennzeichnet, daß** in die den Reaktionsraum (6) durchströmenden Abgase zusätzlich Ammoniak (NH₃), eine Ammoniak-Lösung oder ein Additiv zur Stickoxid-Minderung eingedüst wird.

9. Vorrichtung zur Wärmebehandlung von feinkörnigem Gut, insbesondere zur Herstellung von Zementklinker aus Zementrohmehl, enthaltend
a) einen von heißen Gasen von unten nach oben durchströmten Zyklonvorwärmer (1) mit mehreren im wesentlichen übereinander angeordneten Zyklonstufen (1a, 1b, 1c) zum Vorwärmen des Gutes,
b) einen Brennofen (2) zum Fertigbrennen des vorerhitzten Gutes,
c) einen Kühler (3) zum Abkühlen des gebrannten Gutes,
d) eine zwischen dem Brennofen (2) und dem Zyklonvorwärmer (1) angeordnete, von den heißen Abgasen des Brennofens (2) durchströmte und mit wenigstens einer Brennstoffzuführung (9, 9a) versehene Calcinationszone (4), in der eine untere Teilzone als im wesentlichen vertikal verlaufender Reaktionsraum (6) ausgebildet ist, an den einerseits eine erwärmte Kühlerabluft als Tertiärluft heranführende Tertiärluftleitung (7) und andererseits eine mit der zweituntersten Zyklonstufe (1b) des Vorwärmers (1) verbundene Gutleitung (10) für vorgewärmtes Gut angeschlossen ist, wobei der Reaktionsraum mit einer reduzierenden Atmosphäre zur Minderung des Stickoxidgehalts in den Abgasen des Brennofens betrieben wird,
**dadurch gekennzeichnet, daß**
e) die Gutleitung (10) aus der zweituntersten Zyklonstufe (1b) an den unteren Endbereich (6a) des Reaktionsraumes (6) angeschlossen ist;
f) der drittuntersten Zyklonstufe (1c) des Zyklonvorwärmers (1) eine Gutaufteileinrichtung (11) mit wenigstens zwei Teilleitungsanschlüssen zugeordnet ist, die über eine erste Gutteilleitung (12a) mit der zweituntersten Zyklonstufe (1b) verbunden und über eine zweite Gutteilleitung (12b) an die Calcinationszone (4) in einem Bereich (12b', 12b'') angeschlossen ist, der mit einem deutlichen Abstand (A; HA) oberhalb der Anschlußstelle (10') der mit der zweituntersten Zyklonstufe (1b) verbundenen Gutleitung (10) an den unteren Endbereich (6a) des Reaktionsraumes (6) liegt;
g) die Tertiärluftleitung (7) zumindest mit dem unteren Endbereich (6a) des Reaktionsraumes (6) oberhalb einer Brennstoffzuführung (9) verbunden ist.

10. Vorrichtung nach Anspruch 9, **dadurch gekennzeichnet, daß** der Brennofen ein Drehrohrofen (1) ist, eine den Ofeneinlauf (2a) mit der untersten Zyklonstufe (1a) verbindende Ofenabgasleitung (5) wenigstens einen Teil der Calcinationszone (4) bildet und der Reaktionsraum (6) in einem im wesentlichen vertikal verlaufenden ersten Teilabschnitt der Ofenabgasleitung (5) ausgebildet und daß die Tertiärluftleitung (7) in zwei mit Mengeneinstellorganen (8) versehene Tertiärluft-Teilleitungen (7a, 7b) unterteilt ist, von denen die erste Tertiärluft-Teilleitung (7a) in den unteren Endbereich (6a) des Reaktionsraumes (6) und die zweite Tertiärluft-Teilleitung (7b) als Oberluftzuführung in den oberen Endbereich (6b) dieses Reaktionsraumes (6) angeschlossen ist, wobei der vertikale Abstand (A) zwischen diesen beiden Tertiärluft-Anschlußstellen (7a', 7b') die Länge des Reaktionsraumes derart bestimmt, daß die Gasverweilzeit im Reaktionsraum in einem Bereich von etwa 0,5 bis 1 s eingestellt ist.

11. Vorrichtung nach Anspruch 10, **dadurch gekennzeichnet, daß** die mit der drittuntersten Zyklonstufe (1c) verbundene zweite Gutteilleitung (12b) an den oberen Endbereich (6b) des Reaktionsraumes (6) und - vorzugsweise dicht unterhalb der Anschlußstelle (7b') der zweiten Tertiärluft-Teilleitung (7b) - - angeschlossen ist.

12. Vorrichtung nach Anspruch 10, **dadurch gekennzeichnet, daß** in der Calcinationszone (4) im Anschluß an den oberen Endbereich (6b) des Reaktionsraumes (6) eine zweite Teilzone als Oxidationszone (14) ausgebildet und mit einer Temperatur von unterhalb 1.200 °C, vorzugsweise in einem Temperaturbereich von etwa 900 bis 1.050 °C, betreibbar ist und daß die mit der drittuntersten Zyklonstufe (1c) verbundene zweite Gutteilleitung (12b) an diese Oxidationszone (14) mit Abstand (HA) oberhalb der Anschlußstelle (7b') für die zweite Tertiärluft-Teilleitung (7b) angeschlossen ist.

13. Vorrichtung nach Anspruch 10, **dadurch gekennzeichnet, daß** in der Ofenabgasleitung (5) in Gasströmungsrichtung mit Abstand hinter dem Reaktionsraum (6) eine Mischkammer (13) ausgebildet ist.

14. Vorrichtung nach Anspruch 9, **gekennzeichnet durch** die Anordnung einer Einrichtung zum Eindüsen von Ammoniak (NH₃) oder einer Ammoniak-Lösung in den Reaktionsraum (6).

## Claims

1. A process for the heat-treatment of fine-grained material, especially for the manufacture of cement clinker from cement raw meal, comprising the following process steps:
a) the material is pre-heated in a multi-stage pre-heating zone (1) by means of hot gases,
b) thereafter the pre-heated material is further heated and at least substantially calcined in a calcination zone (4) which is supplied with additional fuel and through which hot exhaust gases of a burning zone (2) flow,
c) then the material so calcined is burned to completion in the burning zone and is then cooled in a cooling zone (3),
d) warmed exhaust air from the cooling zone (3) being introduced as tertiary air into the calcination zone (4) and a lower partial zone therein being operated as a reaction space (6) which is charged with pre-heated material from the second-lowest pre-heating stage (1b) and in which a reducing atmosphere is maintained in order to lower the nitrogen oxide content in the exhaust gases of the burning zone (2),
**characterised by** the following features:
e) the pre-heated material from the second-lowest pre-heating stage (1b) is introduced substantially entirely into the lower end region (6a) of the reaction space (6) of the calcination zone (4), whilst the pre-heated material from the third-lowest pre-heating stage (1c) is divided into at least two partial quantities of which a first partial quantity of material is introduced into the second-lowest pre-heating stage and a second partial quantity of material is introduced into the calcination zone (4) at a distinct vertical distance above the point (10') in the lower end region (6a) at which the pre-heated material from the second-lowest pre-heating stage (1b) is introduced into the reaction space (6);
f) tertiary air is introduced at least into the lower end region (6a) of the reaction space (6).

2. A process according to claim 1, **characterised in that** the second partial quantity of material from the third-lowest pre-heating stage (1c) which is to be introduced into the higher end region of the calcination zone is selected in a proportion of approximately from 20 to 40 %, preferably in an order of approximately 30 %, and the first partial quantity of material is introduced in total as the main quantity into the second-lowest pre-heating stage (1b).

3. A process according to claim 1, **characterised in that** - viewed in the direction of flow of the burning zone exhaust gases - an adjustable first partial stream of tertiary air is introduced into the lower end region (6a) of the reaction space (6) and downstream of a fuel inlet (9), and an adjustable second partial stream of that tertiary air is introduced as upper air into the upper end region (6b) of the reaction space (6).

4. A process according to claim 3, **characterised in that** the distance (A) between the introduction points of the first tertiary air partial stream and the introduction point of the second tertiary air partial stream (upper air) is of a dimension such that the gas residence time between those two introduction points is in the range of approximately from 0.5 to 1 s.

5. A process according to claim 3, **characterised in that** the second partial quantity of material from the third-lowest pre-heating stage (1c) is introduced into the upper end region (6b) of the reaction space (6) approximately at the level of the upper-air introduction point (7b') and is of a magnitude such that the reaction temperature between the lower end region (6a) and the upper end region (6b) **in that** reaction space is adjusted to approximately from 900 to 1000°C.

6. A process according to claim 3, **characterised in that** further fuel is admitted below the upper-air introduction point (7b').

7. A process according to claim 6, **characterised in that** - viewed in the direction of flow of the burning zone exhaust gases - in the calcination zone (4), following the upper end region (6b) of the reaction space (6), a second partial zone is operated as an oxidation zone (14) under oxidising burning conditions with temperatures below 1200°C, preferably in a temperature range of approximately from 900 to 1050°C, and the second partial quantity of material from the third-lowest pre-heating stage is introduced into that oxidation zone (14) at a distance above the upper-air introduction point (7b').

8. A process according to claim 1, **characterised in that** ammonia (NH₃), an ammonia solution or an additive for lowering nitrogen oxide is additionally injected into the exhaust gases flowing through the reaction space (6).

9. An apparatus for the heat-treatment of fine-grained material, especially for the manufacture of cement clinker from cement raw meal, comprising
a) a cyclone pre-heater (1) which has a plurality of cyclone stages (1a, 1b, 1c) arranged substantially one above another for pre-heating the material and through which hot gases flow from bottom to top,
b) a burning kiln (2) for burning the pre-heated material to completion,
c) a cooler (3) for cooling the burned material,
d) a calcination zone (4) which is arranged between the burning kiln (2) and the cyclone pre-heater (1), through which hot exhaust gases of the burning kiln (2) flow, which is provided with at least one fuel inlet (9, 9a) and in which a lower partial zone is formed as a substantially vertically extending reaction space (6) to which a tertiary air line (7) bringing warmed cooler exhaust air as tertiary air is connected at one side and a material line (10) for pre-heated material, which is connected to the second-lowest cyclone stage (1b) of the pre-heater (1), is connected at the other side, the reaction space being operated with a reducing atmosphere to lower the nitrogen oxide content in the exhaust gases of the burning kiln,
**characterised in that**
e) the material line (10) from the second-lowest cyclone stage (1b) is connected to the lower end region (6a) of the reaction space (6);
f) associated with the third-lowest cyclone stage (1c) of the cyclone pre-heater (1) is a material-dividing device (11) having at least two part-line connections which is connected *via* a first material part-line (12a) to the second-lowest cyclone stage (1b) and *via* a second material part-line (12b) to the calcination zone (4) in a region (12b', 12b'') lying at a distinct distance (A; HA) above the connection point (10') of the material line (10) connected to the second-lowest cyclone stage (1b) at the lower end region (6a) of the reaction space (6);
g) the tertiary air line (7) is connected to at least the lower end region (6a) of the reaction space (6) above a fuel inlet (9).

10. An apparatus according to claim 9, **characterised in that** the burning kiln is a rotary tubular kiln (1), a kiln exhaust gas line (5) which connects the kiln inlet (2a) to the lowest cyclone stage (1a) forms at least part of the calcination zone (4) and the reaction space (6) is formed in a substantially vertically extending first portion of the kiln exhaust gas line (5), and the tertiary air line (7) is divided into two tertiary air part-lines (7a, 7b) provided with quantity-adjusting elements (8), the first tertiary air part-line (7a) of which is connected into the lower end region (6a) of the reaction space (6) and the second tertiary air part-line (7b) of which is connected as an upper-air inlet into the upper end region (6b) of that reaction space (6), the vertical distance (A) between those two tertiary air connection points (7a', 7b') determining the length of the reaction space in such a manner that the gas residence time in the reaction space is in a range of approximately from 0.5 to 1 s.

11. An apparatus according to claim 10, **characterised in that** the second material part-line (12b) which is connected to the third-lowest cyclone stage (1c) is connected to the upper end region (6b) of the reaction space (6) and preferably closely below the connection point (7b') of the second tertiary air part-line (7b).

12. An apparatus according to claim 10, **characterised in that**, in the calcination zone (4), following the upper end region (6b) of the reaction space (6), a second partial zone is formed as an oxidation zone (14) and is operable with a temperature below 1200°C, preferably in a temperature range of approximately from 900 to 1050°C, and the second material part-line (12b) which is connected to the third-lowest cyclone stage (1c) is connected to that oxidation zone (14) at a distance (HA) above the connection point (7b') for the second tertiary air part-line (7b).

13. An apparatus according to claim 10, **characterised in that** a mixing chamber (13) is formed in the kiln exhaust gas line (5) at a distance downstream of the reaction space (6) in the direction of gas flow.

14. An apparatus according to claim 9, **characterised by** the arrangement of a device for injecting ammonia (NH₃) or an ammonia solution into the reaction space (6).

## Revendications

1. Procédé pour le traitement thermique de charges finement granulées, en particulier pour la fabrication de clinker à partir de farine de ciment crue, avec les étapes de procédé suivantes :
a) les charges sont préchauffées à l'aide de gaz chauds dans une zone de préchauffage (1) à plusieurs étages,
b) après cela, les charges préchauffées continuent d'être réchauffées et au moins largement calcinées dans une zone de calcination (4) traversée par les fumées chaudes d'une zone de combustion (2), et alimentée avec un combustible supplémentaire,
c) ensuite, les charges ainsi calcinées sont soumises à une cuisson finale dans la zone de combustion et refroidies ensuite dans une zone de refroidissement (3),
d) de sorte que de l'air d'échappement réchauffé sortant de la zone de refroidissement (3) est introduit comme air tertiaire dans la zone de calcination (4), dans laquelle une zone partielle inférieure fonctionne comme compartiment de réaction (6), dans lequel sont enfournées des charges préchauffées sortant de l'avant-dernier étage de préchauffage (1b) et dans lequel une atmosphère réductrice est maintenue pour réduire la teneur en oxyde d'azote dans les fumées de la zone de combustion (2),
**caractérisé par** les caractéristiques suivantes :
e) les charges préchauffées sortant de l'avant-dernier étage de préchauffage (1b) sont introduites sensiblement totalement dans la zone d'extrémité inférieure (6a) du compartiment de réaction (6) de la zone de calcination (4), alors que les charges préchauffées sortant de l'antépénultième étage de préchauffage (1c) sont divisées en au moins deux fractions, dont une première fraction de charges est introduite dans l'avant-dernier étage de préchauffage et une seconde fraction de charges est introduite dans la zone de calcination (4) avec un net espacement en hauteur au-dessus du point (10') dans la zone d'extrémité inférieure (6a) où les charges préchauffées sortant de l'avant-dernier étage de préchauffage (1b) sont introduites dans le compartiment de réaction (6);
f) de l'air tertiaire est introduit au moins dans la zone d'extrémité inférieure (6a) du compartiment de réaction (6).

2. Procédé selon la revendication 1, **caractérisé en ce que** la seconde fraction de charges à introduire dans la zone d'extrémité la plus élevée de la zone de calcination est choisie, à la sortie de l'antépénultième étage de préchauffage (1c), dans une proportion d'environ 20% à 40%, de préférence dans un ordre de grandeur d'environ 30%, et la première fraction de charges est introduite comme quantité principale entièrement dans l'avant-dernier étage de préchauffage (1b).

3. Procédé selon la revendication 1, **caractérisé en ce que**, considéré à chaque fois dans le sens d'écoulement des fumées de la zone de combustion, un premier flux partiel réglable d'air tertiaire est introduit dans la zone d'extrémité inférieure (6a) du compartiment de réaction (6) après une alimentation de combustible (9), et un second flux partiel réglable de cet air tertiaire est introduit comme air supérieur dans la zone d'extrémité supérieure (6b) du compartiment de réaction (6).

4. Procédé selon la revendication 3, **caractérisé en ce que** l'espacement (A) entre le point d'introduction du premier flux partiel d'air tertiaire et le point d'introduction du second flux partiel d'air tertiaire (air supérieur) est dimensionné de manière à ce que le temps de séjour du gaz entre ces deux points d'introduction soit compris entre environ 0,5 s et 1 s.

5. Procédé selon la revendication 3, **caractérisé en ce que** la seconde fraction de charges sortant de l'antépénultième étage de préchauffage (1c) est introduite à peu près à la hauteur du point d'introduction de l'air supérieur (7b') dans la zone d'extrémité supérieure (6b) du compartiment de réaction (6) et **en ce qu'**elle est proportionnée de manière à ce que la température de réaction entre la zone d'extrémité inférieure (6a) et la zone d'extrémité supérieure (6b) dans ce compartiment de réaction soit réglée entre environ 900°C et 1000°C.

6. Procédé selon la revendication 3, **caractérisé en ce que** du combustible supplémentaire est alimenté en dessous du point d'introduction de l'air supérieur (7b').

7. Procédé selon la revendication 6, **caractérisé en ce que**, considéré dans le sens d'écoulement des fumées de la zone de combustion, une seconde zone partielle fonctionne comme zone d'oxydation (14) dans des conditions de combustion oxydante avec des températures inférieures à 1200°C, de préférence dans une plage de température comprise entre environ 900°C et 1050°C, dans la zone de calcination (4) à la suite de la zone d'extrémité supérieure (6b) du compartiment de réaction (6), et **en ce que** la seconde fraction de charges sortant de l'antépénultième étage de préchauffage est introduite dans cette zone d'oxydation (14) avec un espacement au-dessus du point d'introduction (7b') d'air supérieur.

8. Procédé selon la revendication 1, **caractérisé en ce que** de l'ammoniac (NH₃), une solution d'ammoniac ou un additif est injecté, en plus, dans les fumées s'écoulant à travers le compartiment de réaction (6) pour réduire l'oxyde d'azote.

9. Installation de traitement thermique de charges finement granulées, en particulier pour la fabrication de clinker à partir de farine de ciment crue, comprenant
a) un préchauffeur à cyclone (1) parcouru de bas en haut par des gaz chauds, avec plusieurs étages à cyclone (1a, 1b, 1c) disposés sensiblement les uns sur les autres pour préchauffer les charges,
b) un four de cuisson (2) pour la cuisson finale des charges préalablement chauffées,
c) un refroidisseur (3) pour le refroidissement des charges cuites,
d) une zone de calcination (4), disposée entre le four de cuisson (2) et le préchauffeur à cyclone (1), traversée par les fumées chaudes du four de cuisson (2) et comportant au moins une alimentation de combustible (9, 9a), et dans laquelle une zone partielle inférieure est agencée en compartiment de réaction (6) s'étendant sensiblement verticalement, à laquelle est raccordée, d'une part, une conduite d'air tertiaire (7) amenant un air d'échappement du refroidisseur réchauffé comme air tertiaire et, d'autre part, une conduite de charges (10) pour charges préchauffées, reliée à l'avant-dernier étage de cyclone (1b) du préchauffeur (1), le compartiment de réaction fonctionnant sous atmosphère réductrice pour réduire la teneur en oxyde d'azote dans les fumées du four de cuisson,
**caractérisée en ce que**
e) la conduite de charges (10) sortant de l'avant-dernier étage de cyclone (1b) est raccordée à la zone d'extrémité inférieure (6a) du compartiment de réaction (6),
f) une installation de répartition des charges (11) avec au moins deux branchements de conduites de fractions est reliée à l'antépénultième étage de cyclone (1c) du préchauffeur à cyclone (1) et est raccordée, par l'intermédiaire d'une première conduite de fraction de charges (12a), à l'avant-dernier étage de cyclone (1b) et, par l'intermédiaire d'une seconde conduite de fraction de charges (12b), à la zone de calcination (4) dans une zone (12b', 12b'') qui se trouve à une nette distance (A, HA) au-dessus du point de raccordement (10') de la conduite de charges (10), reliée à l'avant-dernier étage de cyclone (1b), vers la zone d'extrémité inférieure (6a) du compartiment de réaction (6),
g) la conduite d'air tertiaire (7) est reliée au moins à la zone d'extrémité inférieure (6a) du compartiment de réaction (6) au-dessus d'une alimentation de combustible (9).

10. Installation selon la revendication 9, **caractérisée en ce que** le four de cuisson est un four tubulaire rotatif (1), une conduite de fumées de four (5) reliant l'entrée du four (2a) au dernier étage de cyclone (1a) forme au moins une partie de la zone de calcination (4) et le compartiment de réaction (6) est formé dans un premier tronçon de la conduite de fumées de four (5) s'étendant sensiblement verticalement, et **en ce que** la conduite d'air tertiaire (7) est divisée en deux conduites secondaires d'air tertiaire (7a, 7b) munies d'organes de réglage de débit (8), dont la première conduite secondaire d'air tertiaire (7a) est raccordée à la zone d'extrémité inférieure (6a) du compartiment de réaction (6) et la seconde conduite secondaire d'air tertiaire (7b) est reliée à la zone d'extrémité supérieure (6b) de ce compartiment de réaction (6) comme alimentation d'air supérieur, et de sorte que la distance verticale (A) entre ces deux points de raccordement d'air tertiaire (7a', 7b') détermine la longueur du compartiment de réaction de manière à ce que le temps de séjour des gaz dans le compartiment de réaction soit réglé dans une plage comprise entre environ 0,5 s et 1 s.

11. Installation selon la revendication 10, **caractérisée en ce que** la seconde conduite de fraction de charges (12b) reliée à l'antépénultième étage de cyclone (1c) est raccordée à la zone d'extrémité supérieure (6b) du compartiment de réaction (6), et de préférence juste en dessous du point de raccordement (7b') de la seconde conduite secondaire d'air tertiaire (7b).

12. Installation selon la revendication 10, **caractérisée en ce que**, dans la zone de calcination (4) rattachée à la zone d'extrémité supérieure (6b) du compartiment de réaction (6), une seconde zone partielle est agencée comme zone d'oxydation (14) et peut être exploitée à une température inférieure à 1200°C, de préférence dans une plage de température comprise entre environ 900°C et 1050°C, et **en ce que** la seconde conduite de fraction de charges (12b) reliée à l'antépénultième étage de cyclone (1c) est raccordée à cette zone d'oxydation (14) avec une distance (HA) au dessus du point de raccordement (7b') pour la seconde conduite secondaire d'air tertiaire (7b).

13. Installation selon la revendication 10, **caractérisée en ce que**, dans la conduite de fumées de four (5), une chambre de mélange (13) est formée à une certaine distance derrière le compartiment de réaction (6) dans le sens d'écoulement du gaz.

14. Installation selon la revendication 9, **caractérisée par** l'aménagement d'un équipement pour l'injection d'ammoniac (NH₃) ou d'une solution d'ammoniac dans le compartiment de réaction (6).
